# EUROPEAN PATENT SPECIFICATION

(11) **EP 4 218 378 B1**
(45) Date of publication and mention of the grant of the patent: **29.05.2024**
(21) Application number: 23164776.9
(22) Date of filing: 08.03.2019
(51) Int. Cl.: A01B 63/111, A01C 7/20, A01C 5/06, A01B 79/00, A01C 7/00, F15B 18/00

(54) **AN AGRICULTURAL PLANTER ROW UNIT WITH A FLUID CONTROL SYSTEM**
LANDWIRTSCHAFTLICHES PFLANZER-REIHENGERÄT MIT FLUIDSTEUERSYSTEM
UNITÉ DE RANGÉE DE PLANTEUR AGRICOLE AVEC SYSTÈME DE COMMANDE DE FLUIDE

(30) Priority: 08.03.2018 US 201862640252 P
(43) Date of publication of application: 02.08.2023
(62) Divisional of application: 19763360.5
(73) Proprietor: Precision Planting LLC, Tremont, IL 61568 (US)
(72) Inventor: HODEL, Jeremy, Tremont, 61568 (US); STOLLER, Jason, Morton, 61550 (US)
(74) Representative: AGCO Intellectual Property Department

(56) References cited:
- WO-A1-2014/018717
- WO-A1-2016/073966
- WO-A1-2017/197274
- US-A1- 2013 248 212
- US-A1- 2016 157 412
- US-A1- 2017 359 940

## Description

### BACKGROUND

There is a need for a fluid control system for supply fluid to multiple actuators associated with different implements on an agricultural planter row unit. While fluid may be supplied individually to each actuator associated with each implement on the row unit, it would be a benefit if a single fluid control system supplied fluid to multiple actuators for actuating each of the different implements on the row unit.

The document WO 2016/073966 A1 shows an agricultural planter row unit comprising a actuator connected to an implement disposed on the agricultural planter row unit and a fluid control system configured to control fluid flow from a fluid source to the actuator. The fluid control system includes an inlet valve in a first fluid path in fluid communication with the fluid source and the actuator, an outlet valve connected to the first fluid path and a pressure sensor disposed to measure fluid pressure in a first fluid line forming part of the first fluid path.

### SUMMARY OF THE INVENTION

In accordance with the invention, there is provided an agricultural planter row unit as defined in claim 1. Further optional features are set out in the claims dependent on claim 1.

### BRIEF DESCRIPTION OF THE DRAWINGS

FIG. 1 is a side elevation view of an embodiment of a row unit of an agricultural planter.
FIG. 2 is a diagram of an embodiment of a system for implementing operational control of the implements on a row unit.
FIG. 3 is a schematic illustration of an embodiment of a fluid control system for two actuators.
FIG. 4 is a schematic illustration of an embodiment of a fluid control system for three actuators.
FIG. 5 is a schematic illustration of an embodiment of a control valve arrangement using two valves.
FIG. 6 is a schematic illustration of another embodiment of a fluid control system supplying fluid to a plurality of actuators.
FIG. 7 is a schematic illustration of an embodiment of a fluid control system providing both up and down forces from a single supply of fluid.
FIG. 8 is a schematic illustration of another embodiment of a fluid control system providing both up and down forces from a single supply of fluid.
FIG. 9 is a perspective view of an embodiment of a retrofit actuator for a trench closing assembly.
FIG. 10 is a side elevation view of an embodiment of an actuator for a trench closing assembly.

### DESCRIPTION

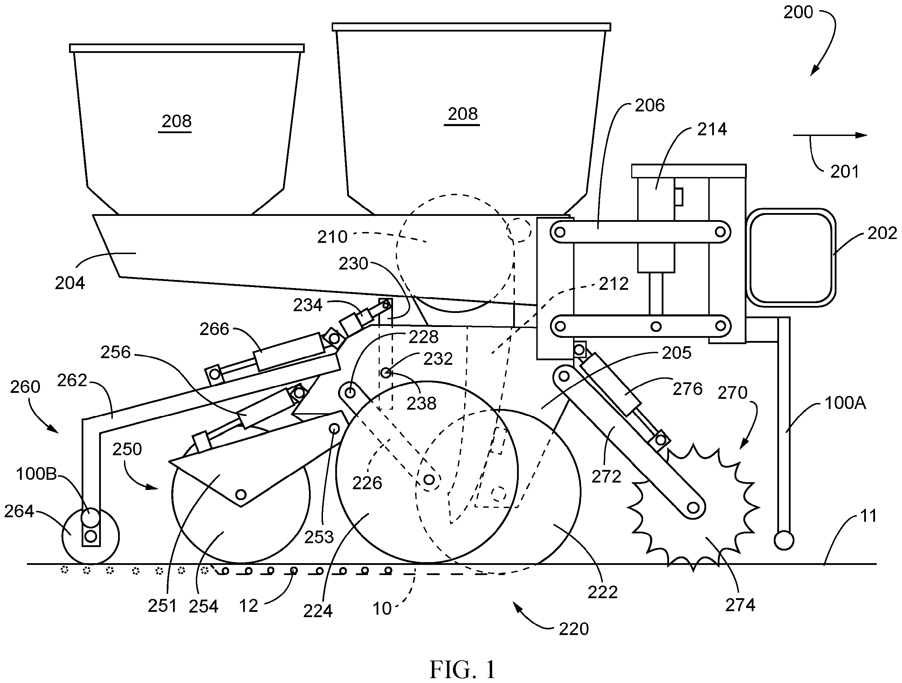

Referring now to the drawings, wherein like reference numerals designate identical or corresponding parts throughout the several views, FIG. 1 illustrates an embodiment of an agricultural planter row unit 200. The row unit 200 is comprised of a frame 204 pivotally connected to a toolbar 202 by a parallel linkage 206 enabling each row unit 200 to move vertically independently of the toolbar 202. The frame 204 operably supports one or more hoppers 208, a seed meter 210, a seed delivery mechanism 212, an optional downforce control system 214, a seed trench opening assembly 220, a trench closing assembly 250, an optional packer wheel assembly 260, and an optional row cleaner assembly 270. It should be understood that the row unit 200 shown in FIG. 1 may be for a conventional planter or the row unit 200 may be a central fill planter, in which the hoppers 208 may be replaced with one or more mini-hoppers and the frame 204 modified accordingly as would be recognized by those of skill in the art.

The optional downforce control system 214 includes an actuator having one end operably coupled relative to the toolbar 202 and another end operably coupled to the parallel linkage to apply lift and/or downforce on the row unit 200 such as disclosed in U.S. Publication No. US2014/0090585. The downforce control system 214 may be referred to as a downforce implement 214 of the row unit 200.

The seed trench opening assembly 220 includes a pair of opening discs 222 rotatably supported by a downwardly extending shank member 205 of the frame 204. The opening discs 222 are arranged to diverge outwardly and rearwardly so as to open a v-shaped trench 10 in the soil 11 as the planter traverses the field. The seed delivery mechanism 212, such as a seed tube or seed conveyor, is positioned between the opening discs 222 to deliver seed from the seed meter 210 into the opened seed trench 10. The depth of the seed trench 10 is controlled by a pair of gauge wheels 224 positioned adjacent to the opening discs 222. The gauge wheels 224 are rotatably supported by gauge wheel arms 226 which are pivotally secured at one end to the frame 204 about pivot pin 228. A rocker arm 230 is pivotally supported on the frame 204 by a pivot pin 232. It should be appreciated that rotation of the rocker arm 230 about the pivot pin 232 sets the depth of the trench 10 by limiting the upward travel of the gauge wheel arms 226 (and thus the gauge wheels) relative to the opening discs 222. The rocker arm 230 may be adjustably positioned via a linear actuator 234 mounted to the row unit frame 204 and pivotally coupled to an upper end of the rocker arm 230. The linear actuator 234 may be controlled remotely or automatically actuated as disclosed, for example, in International Publication No. WO2014/186810. The adjustably positional rocker arm 230 may be referred to as a depth adjustment implement 230 of the row unit 200.

An optional downforce sensor 238 is configured to generate a signal related to the amount of force imposed by the gauge wheels 224 on the soil. In some embodiments, the pivot pin 232 for the rocker arm 230 may comprise the downforce sensor 238, such as the instrumented pins disclosed in U.S. Patent No. 8561472.

An optional seed meter 210 may be any commercially available seed meter, such as a finger-type meter or vacuum seed meter. An exemplary embodiment of one type of vacuum seed meter is the VSet^{®} meter, available from Precision Planting LLC, 23207 Townline Rd, Tremont, IL 61568.

The seed trench closing assembly 250 includes a frame member 251 that is pivotally attached at its forward end to the row unit frame 204 by a pivot 253. The frame member 251 rotatably supports a pair of closing wheels 254 which are disposed on opposing sides of the open seed trench 10. The closing wheels 254 are supported from the frame member 251 at an angle with respect to the forward direction of travel of the row unit 200 indicated by arrow 201 to push the soil inwardly from each side of the open seed trench to close the open seed trench with soil covering the seed previously deposited in the seed trench. An actuator 256 is supported at one end from the row unit frame 200 and is connected at the other end to the frame member 251 to vary the amount of downforce applied to the closing assembly 250. The seed trench closing assembly 250 may be referred to as a trench closing implement 250 of the row unit 200.

An optional packer wheel assembly 260 comprises an arm 262 pivotally attached to the row unit fame 204 and extends rearward of the closing wheel assembly 250 and in alignment therewith. The arm 262 rotatably supports a packer wheel 264. An actuator 266 is pivotally attached at one end to the arm 262 and at its other end to the row unit frame 204 to vary the amount of downforce exerted by the packer wheel 264 to pack the soil over the seed trench 10. The packer wheel assembly 260 may be referred to as a packer wheel implement 260 of the row unit 200.

An optional row cleaner assembly 270 may be the CleanSweep^{®} system available from Precision Planting LLC, 23207 Townline Rd, Tremont, IL 61568. The row cleaner assembly 270 includes an arm 272 pivotally attached to the forward end of the row unit frame 204 and aligned with the trench opening assembly 220. A pair of row cleaner wheels 274 are rotatably attached to the forward end of the arm 272. An actuator 276 is pivotally attached at one end to the arm 272 and at its other end to the row unit frame 204 to adjust the downforce on the arm to vary the aggressiveness of the action of the row cleaning wheels 274 depending on the amount of crop residue and soil conditions. The row cleaner assembly 270 may be referred to as a row cleaner implement 270 of the row unit 200.

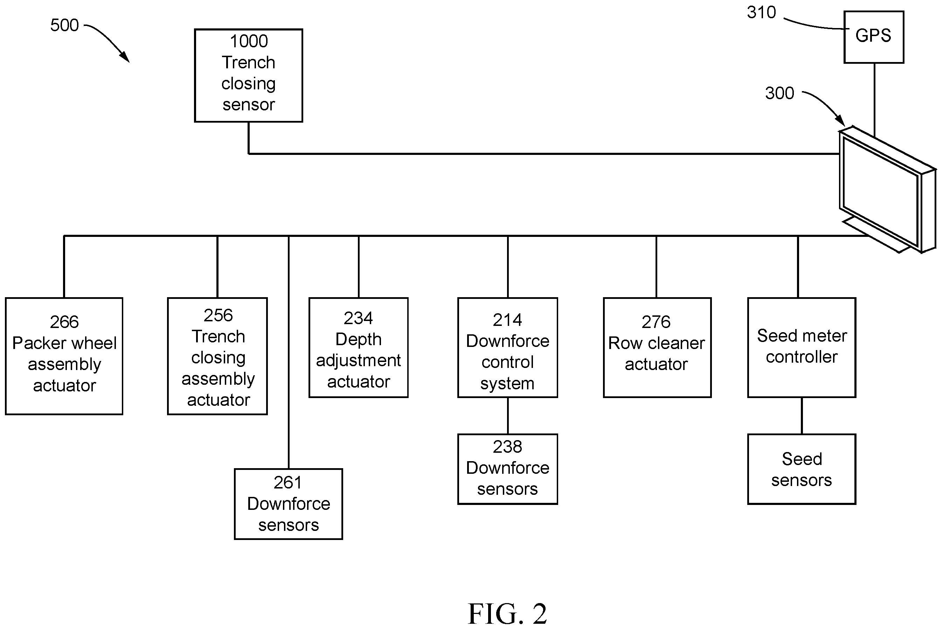

Referring to FIG. 2, a monitor 300 is visible to an operator within the cab of a tractor pulling the planter. The monitor 300 may be in signal communication with a GPS unit 310, the trench closing assembly actuator 256 and the optional packer wheel assembly actuator 266 to enable operational control of the trench closing assembly 250 and the optional packer wheel assembly 260 based on the signals generated by trench closing sensors 1000 such as those described in International Publication No. WO2017/197274. Also as discussed later, the monitor 300 may be programmed to display operational recommendations based on the signals generated by the trench closing sensors 1000. The monitor 300 may also be in signal communication with the row cleaner actuator 276, the downforce control system 214, the depth adjustment actuator 234 so as to enable operational control of the row cleaner assembly 270, the downforce control system 214, and the trench opening assembly 230, respectively.

### Fluid Control System

As used herein, the term fluids includes gases or liquids. Examples of fluids include, but are not limited to, air and hydraulic fluid.

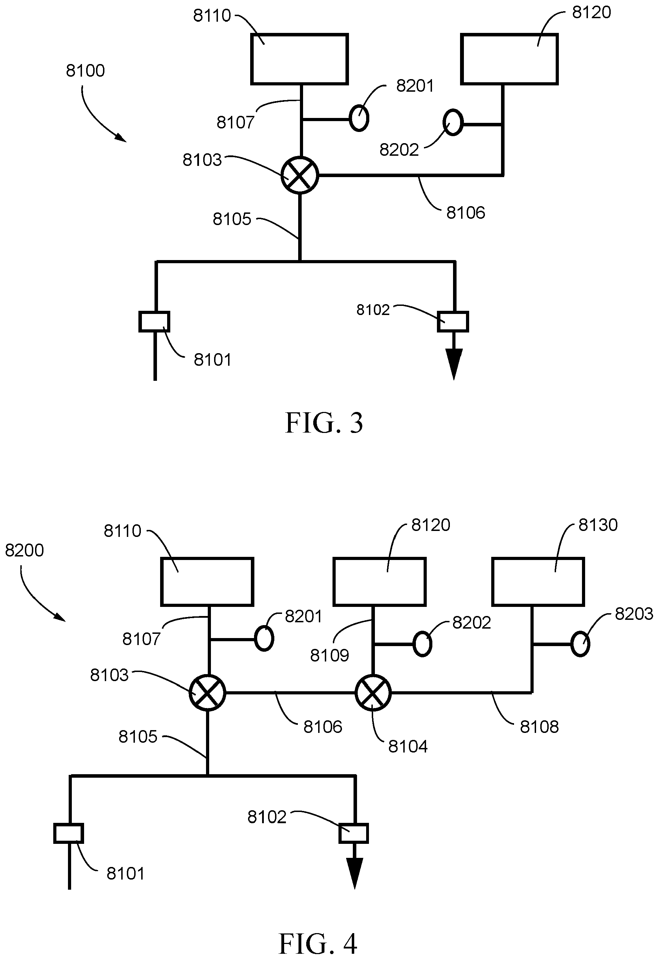

Illustrated in FIG. 3 is an embodiment of a fluid control system 8100 wherein a common supply of fluid is used to supply fluid for actuation of multiple actuators associated with two or more implements on each row unit 200. In this embodiment, fluid flow to and from a first actuator 8110 and a second actuator 8120 is controlled by fluid control system 8100. In one example of the embodiment of the fluid control system 8100, the first actuator 8110 may be actuator 256, and the second actuator 8120 may be actuator 266 of the row unit 200 of FIG. 1. The fluid control system 8100 includes an inlet valve 8101, an outlet valve 8102, and a first control valve 8103. Inlet valve 8101 and outlet valve 8102 may be solenoid valves. The first control valve 8103 may be a multichannel valve that allows flow to one or both of the first actuator 8110 and the second actuator 8120. If additional fluid is needed for the second actuator 8120 to increase the force applied, outlet valve 8102 is closed, inlet valve 8101 is open, and first control valve 8103 is operated to provide fluid communication from line 8105 to line 8106 and to close communication to line 8107. If fluid needs to be removed from first actuator 8110 to decrease the force applied, outlet valve 8102 is open, inlet valve 8101 is closed, and first control valve 8103 is operated to provide fluid communication from line 8107 to line 8105 and to close fluid communication to line 8106. After flowing through outlet valve 8102, the fluid can be returned to a source (not shown) or vented to atmosphere (for gases). To measure the amount of pressure applied to the first actuator 8110, a first pressure sensor 8201 is connected to line 8107. When first control valve 8103 is closed to line 8107, the pressure in the first actuator 8110 can be measured. To measure the amount of pressure applied to the second actuator 8120, a second pressure sensor 8202 is connected to line 8106. When first control valve 8103 is closed to line 8106, the pressure in the second actuator 8120 can be measured.

FIG. 4 illustrates an embodiment of another fluid control system 8200 similar to the previously described fluid control system 8100, but is expanded to include a second control valve 8104, a third actuator 8130, a third pressure sensor 8203, and lines 8108 and 8109. To supply fluid to the third actuator 8130, inlet valve 8101 is open, outlet valve 8102 is closed, the first control valve 8103 is operated to provide fluid communication from line 8105 to line 8106 and to close fluid communication to line 8107, and the second control valve is operated to provide fluid communication from line 8106 to line 8108 and to close fluid communication to line 8109. To expand the system (not shown), additional control valves, actuators, and pressure sensors can be added in series to the embodiment of control system 8200. In one example of the embodiment of the fluid control system 8200, the first actuator 8110 may be actuator 256, the second actuator 8120 may be actuator 266, and the third actuator 8130 may be actuator 276 of the row unit 200 of FIG. 1.

In another embodiment, any of the first actuator 8110, second actuator 8120, or third actuator 8130 do not need to be on separate implements. For example, an implement, such as trench closing assembly 250, may have both an up actuator and a down actuator (not shown), and the embodiment of the fluid control system 8200 may control both the up and down actuators of that single implement 250.

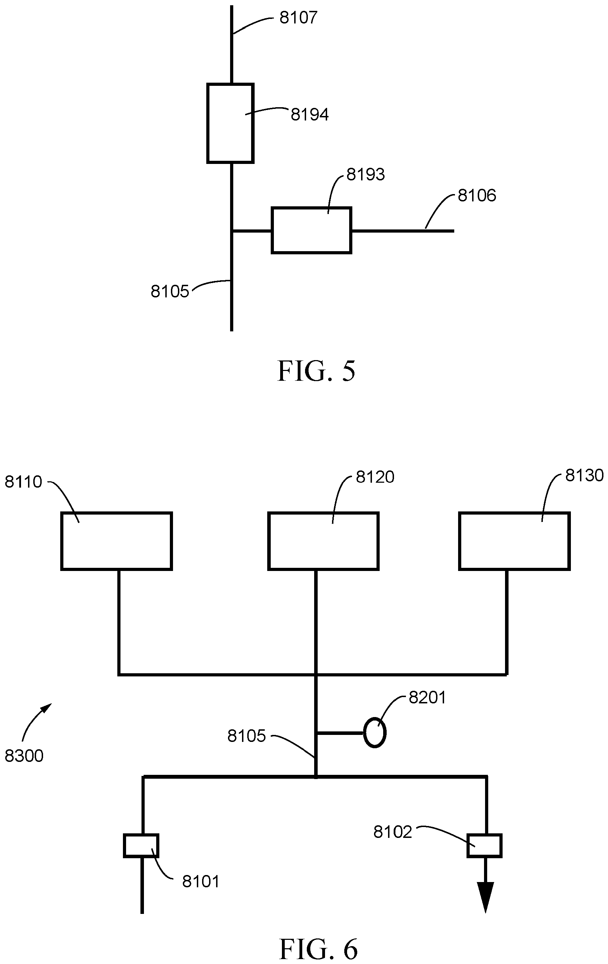

As illustrated in FIG. 5, in another embodiment applicable to either the first or second fluid control systems 8100 or 8200, any of the control valves 8103, 8104 may be replaced by two single acting valves 8193 and 8194. In such an embodiment, to provide fluid flow to or from the first actuator 8110, for example, the valve 8193 is closed, and valve 8194 is open.

Illustrated in FIG. 6 is another embodiment of a fluid control system 8300 capable of providing fluid to multiple actuators 8110, 8120, and 8130. In this embodiment, pressure sensor 8201 measures the pressure in line 8105, which supplies fluid to each actuator 8110, 8120, and 8130. While shown with three actuators, it should be appreciated that there can be two to any desired number of actuators. Such an embodiment could be used, for example, to provide section control of a planter with all actuators across multiple row units within the planter section being controlled to the same pressure.

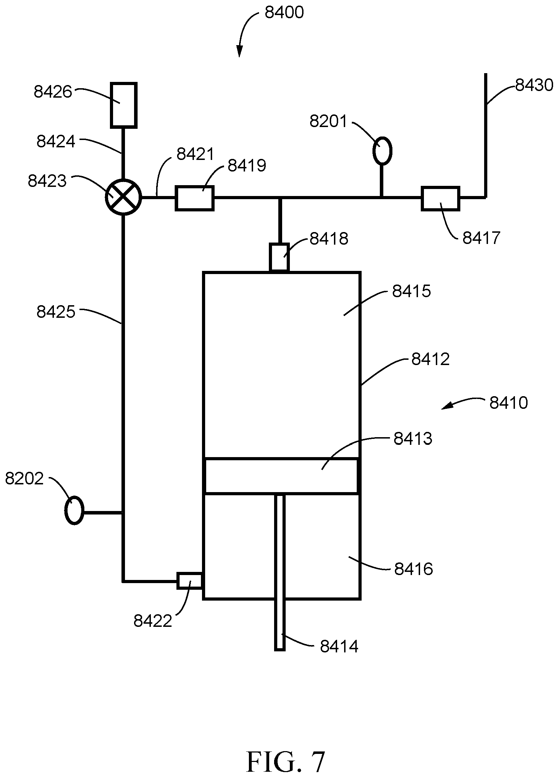

In another embodiment of a fluid control system 8400 illustrated in FIG. 7, a single fluid supply supplies fluid to an actuator 8410 comprising a cylinder 8412 having a movable piston 8413 connected to a piston rod 8414. The piston 8413 separates the cylinder 8412 between a down-chamber 8415 and an up-chamber 8416. A first inlet valve 8417 disposed along inlet line 8430 controls fluid entering the fluid control system 8400. To add fluid to the down chamber 8415, a down-chamber valve 8418 disposed at the down-chamber end of the cylinder 8412 is opened and a line valve 8419 downstream of the down chamber valve 8418 is closed. Pressure in the down-chamber 8415 is measured by first pressure sensor 8201 when down-chamber valve 8418 is open, line valve 8419 is closed, and inlet valve 8417 is closed. To remove fluid from down chamber 8415, down-chamber valve 8418 is open, inlet valve 8417 is closed, line valve 8419 is open to line 8421, an up-chamber valve 8422 disposed at the up-chamber end of the cylinder 8412 is closed, a control valve 8423 downstream of the line valve 8419 and upstream of the up-chamber valve 8422 is open to line 8424 and is closed to line 8425, and outlet valve 8426 is open such that the fluid is able to flow through line 8424 to atmosphere (for gases) or is returned to the fluid source (not shown). To add fluid to up-chamber 8416, inlet valve 8417 is open, down-chamber valve 8418 is closed, line valve 8419 is open, up-chamber valve 8422 is open, and control valve 8423 is open from line 8421 to line 8425. To remove fluid from up-chamber 8416, line valve 8419 is closed, up-chamber valve 8422 is open, control valve 8423 is open from line 8425 to line8424, and outlet valve 8426 is open such that the fluid is able to flow from line 8425 through line 8424 to atmosphere (for gases) or is returned to the fluid source (not shown). To measure pressure in up-chamber 8416 with pressure sensor 8202, line valve 8419 is closed, up-chamber valve 8422 is open, and control valve 8423 is closed to lines 8421 and 8424.

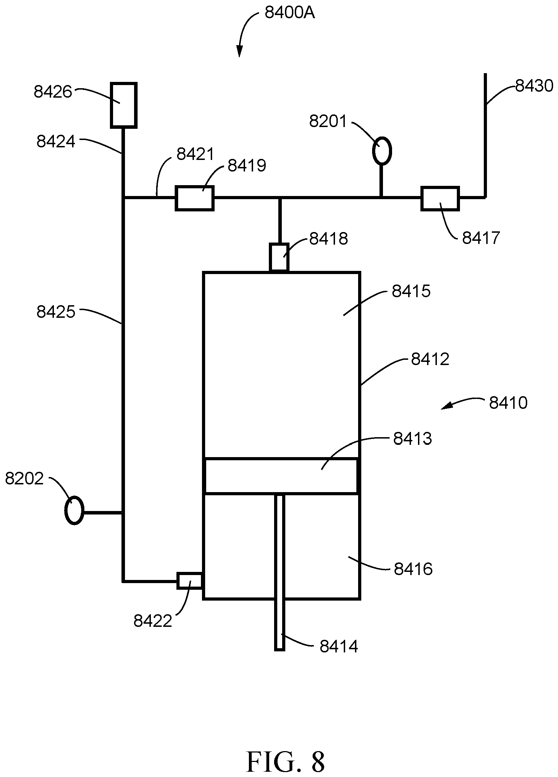

FIG. 8 illustrates a fluid control system 8400A having an arrangement similar to that of the fluid control system 8400 of FIG. 7, except that in the fluid control system 8400A, the control valve 8423 is eliminated. Thus, the operation of the fluid control system 8400A is substantially the same as in the fluid control system 8400, except that the outlet valve 8426 in cooperation with line valve 8419 will open and close as needed to control the flow of fluid between lines 8424 and 8425.

In FIGs. 7 and 8, the outlet valve 8426 may be a duck-bill valve, for venting gas to atmosphere and to prevent dirt from entering line8424. Alternatively, the outlet valve 8426 may be a solenoid valve, for venting gas to atmosphere or for returning the fluid to the fluid source.

Each of the valves described herein (e.g., 8101, 8102, 8103, 8104, 8193, 8194, 8417, 8418, 8419, 8422, 8423, 8426) and the pressure sensors (e.g., 8201, 8202, 8203) are in signal communication with monitor 300 to control the opening and closing of the valves and to measure the pressure. Alternatively, there can be a separate control with a single row network, which is described in International Publication WO2014/018717 to which the valves and pressure sensors are connected. Valves 8101, 8102, 8103, 8104, 8193, 8194, 8417, 8418, 8419, 8422, 8423, 8426 may be solenoid valves.

Any actuator described herein can be any actuator that can apply a force. Examples of actuators include, but are not limited to, pneumatic actuators, hydraulic actuators, electromechanical actuators, and electro-hydraulic actuators.

### Downforce System for Trench Closing Assembly

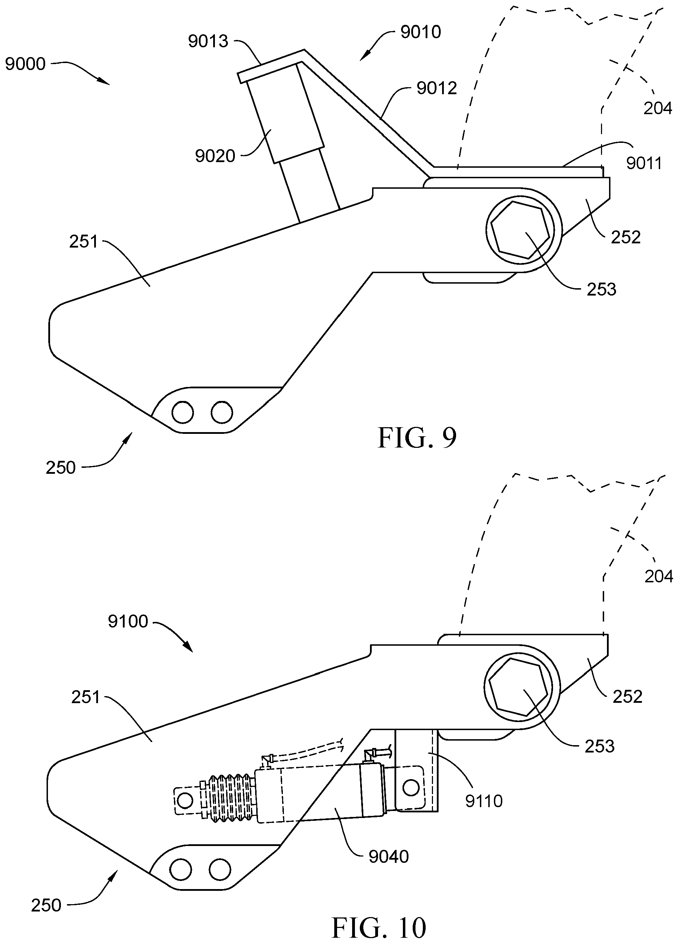

FIG. 9 illustrates an embodiment of a retrofit downforce system 9000 for a trench closing assembly 250. In this embodiment, rather than the trench closing actuator 256 being secured at one end to the row unit frame 204 as illustrated in FIG. 1 and described above, the downforce system 9000 includes a bracket 9010 and an actuator 9020 disposed on the trench closing assembly 250 itself. It should be understood that reference to the actuator 9020 is used interchangeably with the trench closing assembly actuator 256 illustrated in FIG. 1 and described above, and therefore all references to the actuator 256 in this disclosure should be understood to include the actuator 9020. The bracket 9010 has a base 9011 that is disposed between a mounting bracket 252 on the closing frame member 251of the closing assembly 250 and the row unit frame 204 (not shown in FIG. 9). In one embodiment, when the trench closing assembly 250 is attached to the row unit frame 204, the bracket 9010 is secured between the row unit frame 204 and the mounting bracket 252. Disposed upward from the base 9011 is an arm 9012. Disposed at the other end of the arm 9012, opposite the base 9011 is a plate 9013. The actuator 9020 is disposed between the plate 9013 and the trench closing frame 251. The actuation of the actuator 90200 causing it to extend or retract applies a force on the closing frame member 251 causing the frame member 251 to pivot about the pivot 253. An example of the actuator 9020 is the actuator identified by reference number 200 in U.S. Patent No. 8,550,020, which can be controlled by the control system 100.

Illustrated in FIG. 10 is another embodiment of a downforce system 9100. Again, in this embodiment, rather than the trench closing actuator 256 being secured at one end to the row unit frame 204 as illustrated in FIG. 1 and described above, the downforce system 9100 includes a bracket 9110 and an actuator 9040 disposed on the trench closing assembly 250 itself. It should also be appreciated that in conventional trench closing assemblies which utilize a spring to apply downforce to the trench closing assembly, the actuator 9040 may be used in place of such a spring. Accordingly, it should be understood that reference to the actuator 9040 is used interchangeably with the trench closing assembly actuator 256 illustrated in FIG. 1 and described above, and therefore all references to the actuator 256 in this disclosure should be understood to include the actuator 9040. In this embodiment, the downforce system 9100 includes a bracket 9110 attached to and extending downwardly from the mounting bracket 252 of the trench closing assembly 250. The actuator 9040 is connected at one end to bracket 9110 and at its other end to the closing frame member 251. The actuation of the actuator 9040 causing it to extend or retract causes the closing frame member 251 to pivot about the pivot 253. An example of the actuator 9040 is the actuator identified by reference number 200 in U.S. Patent No. 8,550,020, which can be controlled by control system 100.

Various modifications to the embodiments and the general principles and features of the apparatus, systems and methods described herein will be readily apparent to those of skill in the art. Thus, the appended claims should not be limited to the embodiments of the apparatus, systems and methods described herein and illustrated in the accompanying drawing figures, but should be accorded the scope which is defined by the following claims.

## Claims

1. An agricultural planter row unit (200) comprising:
a first actuator (8110; 8410) connected to a first implement (250) disposed on the agricultural planter row unit (200);
a second actuator (8120; 8140) connected to a second implement (260) disposed on the agricultural planter row unit (200), the second implement (260) being different from the first implement (250);
a fluid control system (8100) configured to control fluid flow from a fluid source to each of the first and second actuators (8110, 8120; 8410), the fluid control system including:
an inlet valve (8101) in a first fluid path (8105) in fluid communication with the fluid source and each of the first and second actuators (8110, 8120; 8410);
an outlet valve (8102) connected to the first fluid path (8105); and
a pressure sensor (8201) disposed to measure fluid pressure in a first fluid line (8105) forming part of the first fluid path (8105).

2. The agricultural planter row unit (200) of claim 1, further comprising
a third actuator (8130; 8410) connected to a third implement (230, 270) disposed on the agricultural planter row unit (200), the third implement being different from the first implement (250) and second implement (260); and
wherein the first fluid path (8150) is in fluid communication with the third actuator (8130; 8410).

3. The agricultural planter row unit (200) of claim 1, wherein the first and second implements (250, 260) are selected from the group consisting of: (i) a trench closing implement; (ii) a packer wheel implement; (iii) a row cleaner implement; (iv) a depth adjustment implement; and (v) a downforce implement.

4. The agricultural planter row unit (200) of claim 2, wherein the first, second and third implements (250, 260 230, 270) are selected from the group consisting of: (i) a trench closing implement; (ii) a packer wheel implement; (iii) a row cleaner implement; (iv) a depth adjustment implement; and (v) a downforce implement.

5. The agricultural planter row unit (200) of claim 1 or claim 2, wherein each of the actuators (8410) comprise a cylinder (8412) having a movable piston (8413) connected to a piston rod (8414), the piston separating the cylinder between a down-chamber (8415) and an up-chamber (8422); and
wherein each of the actuators (8410) further comprises a down-chamber valve (8418) disposed at the down-chamber end of the cylinder and an up-chamber valve (8422) disposed at the up-chamber end of the cylinder.

6. The agricultural planter row unit (200) of any of claims 1 to 5, wherein the first implement (250) comprises a trench closing implement, the trench closing implement comprising:
a mounting bracket rigidly secured to a frame member (204) of the row unit (200);
a closing frame member (251) pivotally coupled to the mounting bracket about a pivot axis (253);
a bracket member having a first end secured to the mounting bracket; and
wherein the first actuator (8110; 8410) is coupled at a first end to the bracket member and a second end of the first actuator (8110; 8410) is coupled to the closing frame member (251), whereby actuation of the first actuator causes said closing frame member to pivot with respect to said mounting bracket about the pivot axis.

## Patentansprüche

1. Landwirtschaftliche Pflanz-Reiheneinheit (200) mit:
einem ersten Aktuator (8110; 8410), der an ein erstes Gerät (250) angeschlossen ist, welches an der landwirtschaftlichen Pflanz-Reiheneinheit (200) angeordnet ist;
einem zweiten Aktuator (8120; 8140), der an ein zweites Gerät (260) angeschlossen ist, welches an der landwirtschaftlichen Reihen-Pflanzeinheit (200) angeordnet ist, wobei sich das zweite Gerät (260) von dem ersten Gerät (250) unterscheidet;
einem Fluidsteuersystem (8100), das konfiguriert ist, um einen Fluidfluss von einer Fluidquelle zu jedem von dem ersten und dem zweiten Aktuator (8110, 8120; 8410) zu steuern, wobei das Fluidsteuersystem umfasst:
ein Einlassventil (8101) in einem ersten Fluidpfad (8105) in Fluidkommunikation mit der Fluidquelle und jedem von dem ersten und dem zweiten Aktuator (8110, 8120; 8410);
ein Auslassventil (8102), das an den ersten Fluidpfad (8105) angeschlossen ist; und
einen Drucksensor (8201), der angeordnet ist, um einen Fluiddruck in einer ersten Fluidleitung (8105) zu messen, welche einen Teil des ersten Fluidpfads (8105) bildet.

2. Landwirtschaftliche Pflanz-Reiheneinheit (200) nach Anspruch 1, weiterhin mit
einem dritten Aktuator (8130; 8410), der an ein drittes Gerät (230, 270) angeschlossen ist, welches an der landwirtschaftlichen Pflanz-Reiheneinheit (200) angeordnet ist, wobei sich das dritte Gerät von dem ersten Gerät (250) und dem zweiten Gerät (260) unterscheidet; und
wobei der erste Fluidpfad (8150) in Fluidkommunikation mit dem dritten Aktuator (8130; 8410) steht.

3. Landwirtschaftliche Pflanz-Reiheneinheit (200) nach Anspruch 1, wobei das erste und das zweite Gerät (250, 260) aus der Gruppe ausgewählt werden, die besteht aus: (i) einem Furchenschließgerät; (ii) einem Packerradgerät; (iii) einem Reihenreinigergerät; (iv) einem Tiefeneinstellgerät und (v) einem Niederdrückgerät.

4. Landwirtschaftliche Pflanz-Reiheneinheit (200) nach Anspruch 2, wobei das erste, das zweite und das dritte Gerät (250, 260, 230, 270) aus der Gruppe ausgewählt werden, die besteht aus: (i) einem Furchenschließgerät; (ii) einem Packerradgerät; (iii) einem Reihenreinigergerät; (iv) einem Tiefeneinstellgerät und (v) einem Niederdrückgerät.

5. Landwirtschaftliche Pflanz-Reiheneinheit (200) nach Anspruch 1 oder Anspruch 2, wobei jeder der Aktuatoren (8410) einen Zylinder (8412) mit einem beweglichen Kolben (8413) aufweist, der an eine Kolbenstange (8414) angeschlossen ist, wobei der Kolben den Zylinder in eine untere Kammer (8415) und eine obere Kammer (8422) aufteilt; und
wobei jeder der Aktuatoren (8410) weiterhin ein unteres Kammerventil (8418), das am Ende der unteren Kammer des Zylinders angeordnet ist, und ein oberes Kammerventil (8422), das am Ende der oberen Kammer des Zylinders angeordnet ist, aufweist.

6. Landwirtschaftliche Pflanz-Reiheneinheit (200) nach einem der Ansprüche 1 bis 5, wobei das erste Gerät (250) ein Furchenschließgerät aufweist, wobei das Furchenschließgerät aufweist:
eine Montagehalterung, die starr an einem Rahmenbauteil (204) der Reiheneinheit (200) gesichert ist;
ein Schließrahmenbauteil (251), das um eine Schwenkachse (253) verschwenkbar an die Montagehalterung gekoppelt ist;
ein Halterungsbauteil, das ein erstes Ende hat, welches an der Montagehalterung gesichert ist; und
wobei der erste Aktuator (8110; 8410) an einem ersten Ende an das Halterungsbauteil gekoppelt ist und ein zweites Ende des ersten Aktuators (8110; 8410) an das Schließrahmenbauteil (251) gekoppelt ist, wobei eine Betätigung des ersten Aktuators das Schließrahmenbauteil dazu veranlasst, bezüglich der Montagehalterung um die Schwenkachse zu schwenken.

## Revendications

1. Unité de formation de rangée de planteur agricole (200) comprenant :
un premier actionneur (8110 ; 8410) relié à un premier outillage (250) disposé sur l'unité de formation de rangée de planteur agricole (200) ;
un deuxième actionneur (8120 ; 8140) relié à un deuxième outillage (260) disposé sur l'unité de formation de rangée de planteur agricole (200), le deuxième outillage (260) étant différent du premier outillage (250) ;
un dispositif de commande de fluide (8100) configuré de manière à commander un écoulement de fluide à partir d'une source de fluide vers chacun des premier et deuxième actionneurs (8110, 8120 ; 8410), le dispositif de commande de fluide comportant :
une vanne d'entrée (8101) sur un premier circuit de fluide (8105) en communication fluidique avec la source de fluide et chacun des premier et deuxième actionneurs (8110, 8120 ; 8410) ;
une vanne de sortie (8102) raccordée au premier circuit de fluide (8105) ; et
un capteur de pression (8201) disposé de manière à mesurer la pression du fluide dans une première canalisation hydraulique (8105) faisant partie du premier circuit de fluide (8105).

2. Unité de formation de rangée de planteur agricole (200) selon la revendication 1, comprenant, en outre :
un troisième actionneur (8130 ; 8410) relié à un troisième outillage (230, 270) disposé sur l'unité de formation de rangée de planteur agricole (200), le troisième outillage étant différent des premier outillage (250) et deuxième outillage (260) ; et
dans laquelle le premier circuit de fluide (8150) est en communication fluidique avec le troisième actionneur (8130 ; 8410).

3. Unité de formation de rangée de planteur agricole (200) selon la revendication 1, dans laquelle les premier et deuxième outillages (250, 260) sont sélectionnés à partir du groupe formé par : (i) un outillage de fermeture de tranchée ; (ii) un outillage formant roue de compactage ; (iii) un outillage de nettoyage de rangée ; (iv) un outillage de réglage de profondeur ; et (v) un outillage d'application d'effort au sol.

4. Unité de formation de rangée de planteur agricole (200) selon la revendication 2, dans laquelle les premier, deuxième et troisième outillages (250, 260 230, 270) sont sélectionnés à partir du groupe formé par : (i) un outillage de fermeture de tranchée ; (ii) un outillage formant roue de compactage ; (iii) un outillage de nettoyage de rangée ; (iv) un outillage de réglage de profondeur ; et (v) un outillage d'application d'effort au sol.

5. Unité de formation de rangée de planteur agricole (200) selon la revendication 1 ou 2, dans laquelle chacun des actionneurs (8410) comprend un vérin (8412) comportant un piston mobile (8413) relié à une tige de piston (8414), le piston séparant le cylindre entre un compartiment inférieur (8415) et un compartiment supérieur (8422) ; et
dans laquelle chacun des actionneurs (8410) comprend, en outre, une vanne de compartiment inférieur (8418) disposée à l'extrémité du compartiment inférieur du cylindre et une vanne de compartiment supérieur (8422) disposée à l'extrémité du compartiment supérieur du cylindre.

6. Unité de formation de rangée de planteur agricole (200) selon l'une quelconque des revendications 1 à 5, dans laquelle le premier outillage (250) comprend un outillage de fermeture de tranchée, l'outillage de fermeture de tranchée comprenant :
un support de montage fixé rigidement sur un élément de châssis (204) de l'unité de formation de rangée (200) ;
un élément de châssis de fermeture (251) couplé de manière à pouvoir pivoter au support autour d'un axe de pivot (253) ;
un élément de support présentant une première extrémité fixée sur le support ; et
dans laquelle le premier actionneur (8110 ; 8410) est couplé au niveau d'une première extrémité à l'élément de support et une seconde extrémité du premier actionneur (8110 ; 8410) est couplée à l'élément de châssis de fermeture (251), de telle sorte que l'activation du premier actionneur provoque le pivotement dudit élément de châssis de fermeture par rapport audit support de montage autour de l'axe de pivot.
